# EUROPEAN PATENT SPECIFICATION

(11) **EP 3 108 993 B1**
(45) Date of publication and mention of the grant of the patent: **15.08.2018**
(21) Application number: 16176293.5
(22) Date of filing: 24.06.2016
(51) Int. Cl.: B23K 26/38, B23K 26/402, B23K 26/60, B29C 65/16, B29C 65/00, B23K 26/36, B29C 65/02, B29C 65/08, B29C 65/36, B29C 65/34, B29C 65/78, B29L 31/30, B23K 103/16, B23K 103/00

(54) **METHOD FOR WELDING TOGETHER TWO COMPONENTS MADE OF A THERMOPLASTIC LAYERED COMPOSITE MATERIAL**
VERFAHREN ZUM ZUSAMMENSCHWEISSEN VON ZWEI BAUTEILEN AUS EINEM THERMOPLASTISCHEN SCHICHTVERBUNDMATERIAL
PROCÉDÉ POUR SOUDER ENSEMBLE DEUX COMPOSANTS EN MATÉRIAU COMPOSITE MULTICOUCHE THERMOPLASTIQUE

(30) Priority: 24.06.2015 DE 102015110193
(43) Date of publication of application: 28.12.2016
(73) Proprietor: Airbus Operations GmbH, 21129 Hamburg (DE)
(72) Inventor: Heltsch, Norbert, 21129 Hamburg (DE); Linde, Peter, 21129 Hamburg (DE)
(74) Representative: Bird & Bird LLP

(56) References cited:
- WO-A1-2004/028731
- WO-A1-2011/095834
- DE-A1-102010 003 356
- DE-A1-102013 215 502
- WEISS M: "NahtlosesF}genvonFV-Strukturen", INTERNET CITATION, May 2006 (2006-05), XP007901556, Retrieved from the Internet: URL:http://e-collection.ethbib.ethz.ch/eco l-pool/dipl/dipl_248.pdf [retrieved on 2007-01-15]

## Description

The present invention relates to a method for welding together a first component made of a thermoplastic layer or laminate composite material having several layers and a second component made of a thermoplastic layer or laminate composite material having several layers.

In order to connect components made of layer composite materials, such as structural components of aircraft, for example, various prior art methods are known, including, in particular, rivet connections, adhesive connections and welded connections. Rivet connections are relatively expensive and complex to implement, and the rivets used increase the overall weight. In addition, special care must always be paid to ensure that no stress concentrations develop in the vicinity of the bore holes for the rivets. Adhesive connections are also expensive and complex, as they require a special preparation of the surfaces to be bonded together. Welded connections or joints using a lap joint can be easily and reliably implemented. However, this results in a relatively large step in the conjoined surface of the connected components, and the welded connection is between only the two outer layers of the components which face one another. In the document "Nahtloses Fügen von FV-Strukturen" from Niccolo Pini, from ETH Zürich, there is a compendium of different joining techniques for thermoplastic composites. The object of the present invention is to specify a method for welding together two components made of a thermoplastic laminate or layer composite material, which can be carried out easily, quickly and inexpensively, but which nevertheless results in a connection having a high level of strength.

To weld together a first component made of a thermoplastic layer or laminate composite material having several layers disposed one above the other and a second component made of a thermoplastic layer or laminate composite material having several layers disposed one above the other, the present invention envisages firstly forming a step or stepped structure on each of the components. For this purpose, material of the layer composite material of the first component is removed along a first longitudinal edge or in a first end section of the first component by means of a laser beam in order to form a first step structure having a plurality of steps at the first longitudinal edge or in the first end section. In addition, material of the layer composite material of the second component is removed along a second longitudinal edge or in a second end section of the second component by means of a laser beam in order to form a second step structure having a plurality of steps at the second longitudinal edge or in the second end section. The removal can, in each case, take place by means of, e.g., laser evaporation or laser ablation, and the laser beams can be generated for both components by the same laser device or by different laser devices. The longitudinal edges are in the usual manner edges, borders or rims of the components, which extend transversely and, preferably, perpendicularly to the stacking direction of the layers or to the direction defined by the stacking sequence of the layer composite material. The end sections are end sections in the direction of extension of the layers.

Each step of the first step structure is formed by one other or several others of the layers of the layer composite material of the first component and, more specifically, by an end section of the layer or layers. In other words, each step corresponds to one or more of the layers, and each layer is associated with only exactly one of the steps. In addition, each step has, in the usual manner, a surface section parallel to the direction of extension of the layers and a front section transverse to the direction of extension of the layers and, in particular, in their thickness direction. The layers each have two opposite - and, e.g., in particular parallel - extended surfaces, which define the direction of extension of the layers and which are connected by means of one or more surfaces, which extend transversely and, preferably, perpendicularly thereto. The thickness direction of the layers extends transversely and, preferably, perpendicularly to the extended surfaces. The surface section of each step is formed by a section of one of the extended surfaces of one of the layers. In the case of a stair step the surface section is referred to as tread, and the front section defines the rise.

In the same way, each step of the second step structure is formed by one other or several others of the layers of the layer composite material of the second component and, more specifically, by an end section of the layer or layers. In other words, each step corresponds to one or more of the layers, and each layer is associated with only exactly one of the steps. In addition, each step has, in the usual manner, a surface section parallel to the direction of extension of the layers and a front section transverse to the direction of extension of the layers. In the case of a stair step the surface section is referred to as tread, and the front section defines the rise.

The two step structures are formed in such a way that the first component and the second component can be disposed in a position in which they abut one another with their step structures, in which position the surface section of each step of the first step structure abuts a surface section of a step of the second step structure, or the surface section of each step of a consecutive subset of the steps of the first step structure in each case abuts a surface section of a step of the second step structure. In other words, with respect to each corresponding step of the first step structure, there is a lap joint with another step of the second step structure.

The first and the second components are disposed in the abutting position in this manner, and they are then welded to one another by welding together the respective abutting surface sections of the steps of the first and second step structures.

This method can be carried out easily, quickly and inexpensively, yet it increases the strength of the connection because a plurality of welded connections or joints are created between multiple layers of the two components. Furthermore, as compared to a lap joint of two complete layer composite material components, only a smaller step is created in the combined or conjoined surface of the connected components, or a step can even be completely avoided, so that, in the case of aircraft, an improvement in the aerodynamic properties can be achieved. The method can also be carried out in a simple manner automatically by means of robots.

In a preferred embodiment, the first step structure and/or the second step structure are formed in such a way that each step of the respective step structure is formed by exactly one other of the layers of the respective component. In other words, one step is formed per layer. In this manner, a particularly high number of welded connections or joints between different layers of the two components is made possible, and each layer of the first component is connected or joined to another layer of the second component. This makes it possible to achieve a particularly high strength of the connection between the two components.

It is particularly preferred if the first component and the second component have the same number of layers. In this regard, it is particularly preferred if the layers also have the same thickness and, in particular, if the layer construction or the layer structure is overall identical.

In this embodiment, the first and the second step structure can, in particular, advantageously be formed in such a way, and the abutting position can be chosen such that, in the abutting position, each layer of the first component lies at the same level as another layer of the second component. When the series or sequence of steps of the step structures of the two components in the abutting position is viewed in the same direction, the surface section of each step of the first step structure, with the exception of the first or last step, abuts a respective surface section of a corresponding step of the second step structure, and the surface section of each step of the second step structure, with the exception of the last and first step, respectively, abuts a respective surface section of a corresponding step of the first step structure. It is particularly preferred that each step is formed by exactly one other layer and/or that the front section of each step of the first step structure abuts a front section of a step of the second step structure. In any case, steps in the combined or conjoined surface of the connected components can be minimized in their height or completely avoided.

Alternatively, in this embodiment, the first and the second step structure can advantageously be formed in such a way, and the abutting position can be chosen such that, in the abutting position, the first component and the second component are disposed offset to one another by one layer. In other words, the surface section of each step of the first step structure abuts a surface section of a corresponding step of the second step structure, and vice versa. It is particularly preferred that each step is formed by exactly one other layer and/or that the front section of each step of the first step structure abuts a front section of a step of the second step structure. In any case, the number of the welded connections or joints, with which layers of the first component are connected or joined to layers of the second component, is advantageously maximized, since all layers of the first component and of the second component are each welded to exactly one other corresponding layer of the other component. The strength of the connection between the two components can thus be maximized at the expense of a slight step in the combined or conjoined surfaces of the connected components. By contrast with the prior art, the step height or rise amounts only to the thickness of one layer.

In a preferred embodiment of the method, the first and the second step structures are formed in such a way that, in the abutting position, the front section of one, several or all of the steps of the first step structure abuts a front section of a step of the second step structure, i.e., such that the corresponding layers are each disposed in a butted or butt joint.

In a preferred embodiment, following the formation of the first step structure and the second step structure, the surface sections of the steps of the first step structure and of the second step structure are machined or processed in order to reduce the surface roughness. This can take place, for example, using the same laser used to form the step structures, or with another laser. By means of such a surface treatment or finishing the strength and reliability of the individual welded connections can be increased.

The welding can advantageously take place by means of laser welding, ultrasonic welding, induction welding and/or resistance welding. If laser welding is used, the energy, the wavelength and the focusing of the laser beam are each selected such that the laser beam partially passes through the layer series or sequence of layers and the energy required for the welding in the respective welding zone is concentrated or deposited at the boundary surface between two surface sections of two steps.

In a preferred embodiment of the method, the first component and the second component are brought into the abutting position with the aid of a support device. For this purpose, the first component and the second component are positioned or laid spaced apart from one another on the support device in such a way that the first step structure and the second step structure face one another. The first component and the second component are then moved towards one another. It is possible in this regard that only the first component, only the second component or both components are moved. The support device is designed and adapted such that it guides the first component and the second component into the abutting position when the two components are moved towards one another. For this purpose, the support device can, in particular, have a suitably shaped support surface, which is adapted to the shape of the two components, so that they are disposed in predetermined positions on the support surface and then must only be moved towards one another in order to bring them into the abutting position.

In an advantageous embodiment, the first component and the second component are each structural components of an aircraft, such as, for example, fuselage components or fuselage sections which must be connected to one another in order to form an aircraft fuselage.

An exemplary embodiment of the invention is explained in greater detail below with reference to the attached figures.
- Figure 1a: shows two plate-shaped components made of a thermoplastic layer composite material, which are disposed spaced apart from one another.
- Figure 1b: shows the two plate-shaped components of Figure 1a after completion of a laser evaporation step for the formation of step structures at the longitudinal edges or end sections of the two components which face one another.
- Figure 1c: shows the two plate-shaped components of Figure 1b, after they have been brought into abutment.
- Figure 1d: shows the two abutting plate-shaped components of Figure 1c, after they have been welded together.
- Figure 2a: shows the two plate-shaped components of Figure 1b, after they have been brought into abutment in a different manner than in Figure 1c.
- Figure 2b: shows the two abutting plate-shaped components of Figure 2a, after they have been welded together.
- Figure 3a: shows two plate-shaped components made of a thermoplastic layer composite material, which are disposed on a transport and processing trolley.
- Figure 3b: shows the two plate-shaped components of Figure 3b during a laser evaporation step for the formation of step structures along a respective longitudinal edge or in a respective end section of the two components.
- Figure 3c: shows the two plate-shaped components of Figure 3b after arrangement on a support device.
- Figure 3d: shows the two plate-shaped components of Figure 3c, after they have been brought into abutment on the support device and during a laser welding step.
- Figure 4: shows a flowchart of an exemplary embodiment of a method according to the invention for welding together two components made of a thermoplastic layer composite material.

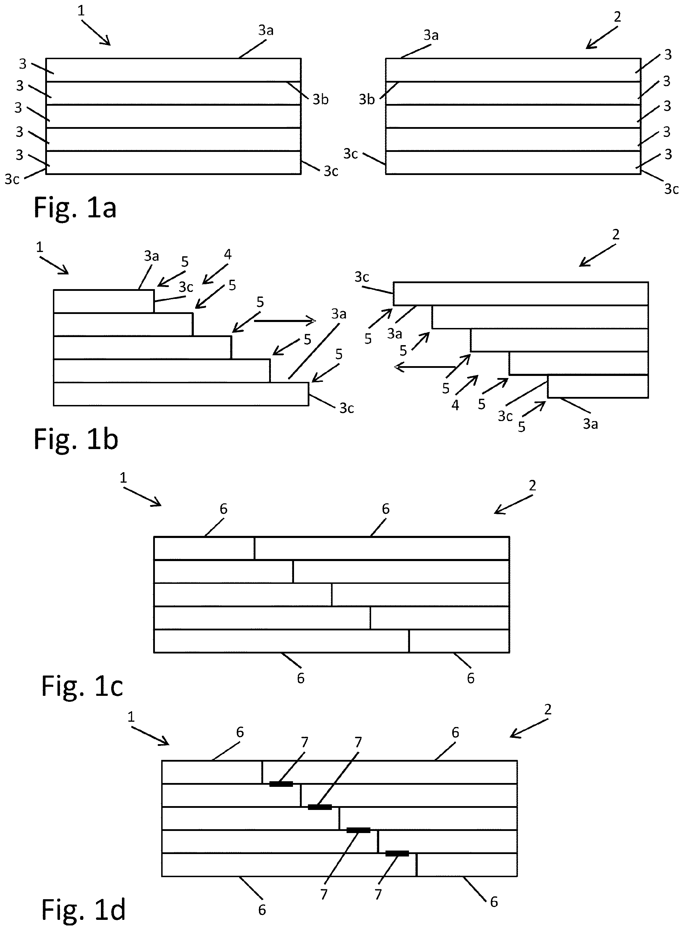

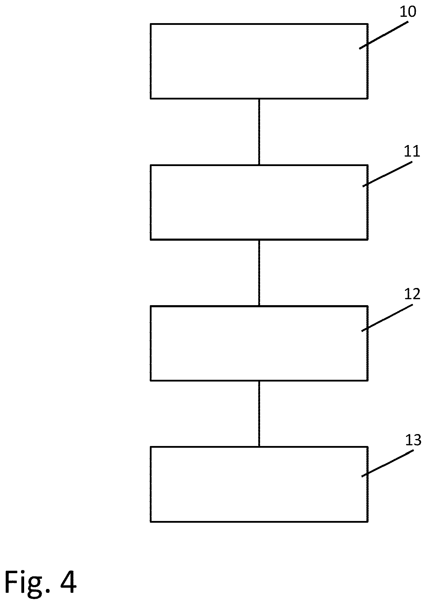

In Figures 1a to 1d it is schematically illustrated how a first component 1 and a second component 2, which are each made of a thermoplastic layer or laminate composite material having multiple layers, are welded together. In the depicted exemplary embodiment, the two components 1, 2 are fuselage sections of an aircraft fuselage. The corresponding method is illustrated in Figure 4.

As shown in Figure 1a, the two components 1, 2 are plate-shaped and comprise a plurality of layers 3 (five in the example depicted), which are disposed one on top of the other. The layers 3 are provided in the same number and with the same thickness in each component 1, 2. Each layer has two opposite extended surfaces 3a, 3b, between which lateral or side surfaces 3c extend (depicted for only one layer 3 in each case) . In the depicted example, the layers 3 are dimensioned such that the lateral surfaces 3c of the layers of each component 1, 2 are aligned with one another and form straight lateral or side surfaces of the components 1, 2. Each layer 3 is made of a thermoplastic material into which, for the purpose of reinforcement, fibers may be embedded, such as, for example, glass fibers and/or carbon fibers (not depicted).

The two components 1, 2 are each subjected to a laser ablation or evaporation step, in which material is removed by means of a laser beam in order to form, on a longitudinal edge of each component 1, 2 or at an end section of each component 1, 2, a step structure 4 having multiple steps 5. In this regard, each step 5 is preferably formed by an end section of exactly one other of the layers 3 so that, in the depicted example, five steps are created per component 1, 2. Each step 3 of the component 1 is formed by a surface section of the extended surface 3a of the corresponding layer 3 and a lateral surface 3c of the corresponding layer 3. The surface section of the extended surface 3a defines the tread, and the lateral surface 3c defines the rise or height of the step 3. Each step 3 of the component 2 is formed by a surface section of the extended surface 3b of the corresponding layer 3 and a lateral surface 3c of the corresponding layer 3. The surface section of the extended surface 3b defines the tread, and the lateral surface 3c defines the rise or height of the step 3.

As can be seen from Figures 1b and 1c, the two step structures 4 complement one another, or are complementary with respect to each other, so that they can be brought into mating engagement with one another. For this purpose, the two components 1, 2 are disposed before or after the laser evaporation or ablation step in such a way that the formed step structures 4 or the corresponding longitudinal edges or end sections face one another and are disposed at the same level or height. The two components 1, 2 are then moved towards one another, as indicated by the arrows in Figure 1b, until the step structures 4 engage or mesh with one another and the components 1, 2 abut one another by means of the step structures 4. This position is shown in Figure 1c, from which it can be seen that the two components 1, 2 are both disposed on the same level. Due to this each layer 3 of the first component 1 is associated with exactly one layer 3 of the second component 2 and is disposed at the same level or height as it. The front faces 3c of these layers 3 associated with one another abut one another in a butt joint. Due to this arrangement of the two components 1, 2, the two outer surfaces 6 of the combination or conjunction of the two components 1, 2 have no step, which ensures good aerodynamic properties.

In this abutting position, the two components 1, 2 are then welded together by means of laser welding, specifically, in each case at the abutting surface sections 3a of the steps 3. As depicted in Figure 1d, four welded connections or joints 7 are thus produced between four pairs of steps. During laser welding, the laser beam used is in each case focused on the desired welding area, so that the layers lying above it are penetrated by the laser beam without causing damage to the material.

Due to the separate welded connection of multiple layers of the two components 1, 2, a high strength and reliability of the connection is achieved.

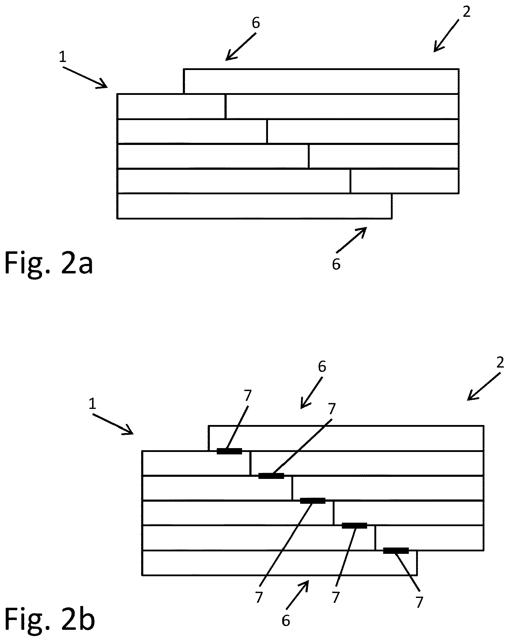

In an alternative embodiment of the method, the two components 1, 2 are, after the formation of the two step structures 4, again moved towards one another in accordance with Figure 1b until the step structures 4 matingly engage with one another and the components 1, 2 abut one another by means of the step structures 4, but in such a way that the two components 1, 2 are disposed offset to one another by one layer. This alternative abutting position is depicted in Figure 2a, from which it can be seen that the layer 3 of the component 1, which layer 3 is bottommost in the figure, is disposed below the bottommost layer 3 of the component 2, the uppermost layer 3 of the component 2 is disposed above the uppermost layer 3 of the component 1, and all remaining layers 3 of the two components 1, 2 are each associated with exactly one layer 3 of the other component 1, 2 and are disposed at the same level as the associated layer 3 of the other component 1, 2. The front faces 3c of these layers 3 associated with one another each abut one another in the butt joint. Due to this arrangement of the two components 1, 2, the two outer surfaces 6 of the combination or conjunction of the two components 1, 2 each have a step, which is, however, only a layer thickness in height.

In this alternative abutting position, the two components 1, 2, just like in the case of Figure 1d, are then welded together by means of laser welding, and specifically in each case on the abutting surface sections 3a of the steps 3. As shown in Figure 2b, five welded connections 7 are thus produced between all five pairs of steps. The slightly reduced aerodynamic properties compared with the example of Figure 1d, thus go hand in hand with an even greater strength and reliability of the connection, because separate welded connections or joints now exist for all layers 3 of the two components 1, 2.

In general, the method for connecting or joining the two components 1, 2 in accordance with the two exemplary embodiments thus comprises, as depicted in Figure 4, the step 10 of laser evaporation or ablation for the formation of the step structure 4 of the first component 1, the step 11 of laser evaporation or ablation for the formation of the step structure 4 of the second component 2, the step 12 of arranging the first component 1 and the second component 2 in the abutting position, as is shown, for example, in Figures 1c and 2a, and the step 13 of welding together the first component 1 and the second component 2, by welding together the abutting surface sections 3a of the steps 3 of the first and second step structures 4.

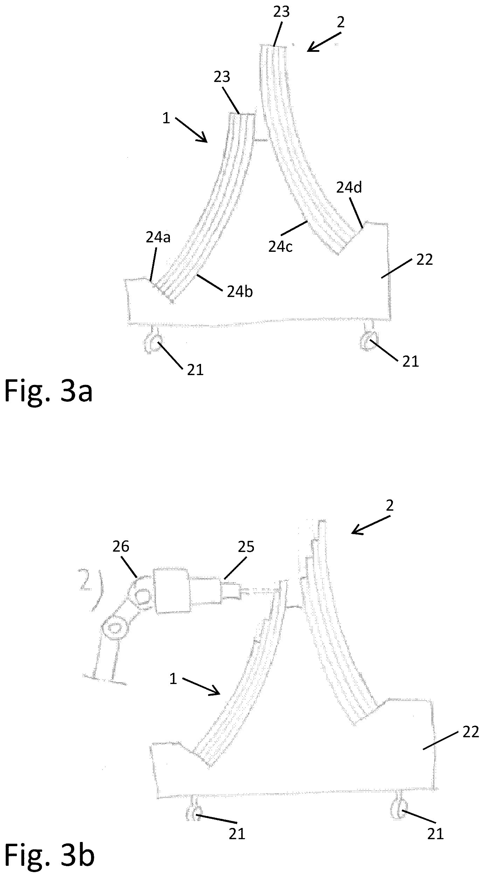

Figures 3a to 3d depict an advantageous possibility of how the above method steps may be carried out, which are generally and schematically illustrated in Figures 1a to 2d.

The two components 1, 2, which are shown in Figures 3a to 3d as curved plate-shaped fuselage segments, are disposed and supported in such a way on a first support device 22 provided with castors 21 that their longitudinal edges or end sections 23, at which the step structures 4 are to be formed, face upwards and are therefore freely accessible for a laser evaporation or ablation. For this purpose, the first support device 22 comprises support surfaces 24a, 24b, 24c and 24d, which are adapted to the shape of the components 1, 2.

With the aid of the castors 21, the first support device 22 can be moved to a laser device 25 which is mounted on a robot arm 26. This allows the step structures 4 to be automatically produced on the two longitudinal edges or end sections 23 by means of laser evaporation or ablation controlled by a control device. For this purpose, the control device stores information about the dimensions and the layer construction of the two components 1, 2, which are taken into account when controlling the robot arm 26 and the laser device 25.

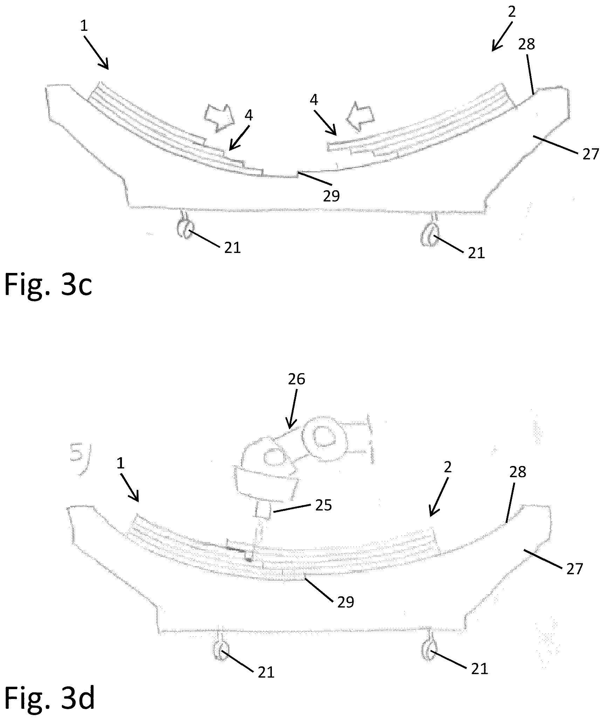

The two components 1, 2 are then disposed spaced apart from one another on a second support device 27 provided with castors 21 and are supported on the second support device 27, which support device has a curved support surface 28, the curvature of which corresponds to the curvature of the two components 1, 2 (see Figure 3c). The positioning is effected such that the two step structures 4 face one another, and specifically in such a way that, simply by moving the two components 1, 2 towards one another (see the arrows in Figure 3c), they can be pushed into one another and then abut one another in the manner described above and depicted in Figure 2a. For this purpose, a step 29 is provided in the support surface 28, which is as high as a layer thickness of the layers 3 and which ensures an arrangement of the two components 1, 2 offset by the thickness of one layer. The support surface 28 easily guides the two components 1, 2 into the position shown in Figures 2a and 3d.

Finally, the support device 27 is once again moved with the aid of the castors 21 to the laser device 25 mounted on the robot arm 26 and is welded by it in the manner depicted in Figure 2b.

## Claims

1. A method for welding together a first component (1) made of a thermoplastic layer composite material having multiple layers (3) and a second component (2) made of a thermoplastic layer composite material having multiple layers (3) comprising the following steps:
- removing of material of the layer composite material of the first component (1) along a first longitudinal edge (23) of the first component (1) by means of a laser beam in order to form a first step structure (4) having a plurality of steps (5) on the first longitudinal edge (23), with each step (5) of the first step structure (4) being formed by one other or several others of the layers (3) of the layer composite material of the first component (1), and having a surface section (3a) parallel to the direction of extension of the layers (3) and a front section (3c) transverse to the direction of extension of the layers (3),
- removing of material of the layer composite material of the second component (2) along a second longitudinal edge (23) of the second component (2) by means of a laser beam in order to form a second step structure (4) having a plurality of steps (5) on the second longitudinal edge (23), wherein
- each step (5) of the second step structure (4) is formed by one other or several others of the layers (3) of the layer composite material of the second component (2), and has a surface section (3b) parallel to the direction of extension of the layers (3) and a front section (3c) transverse to the direction of extension of the layers (3), and
- the first component (1) and the second component (2) are able to be disposed with their step structures (4) in an abutting position, in which position the surface section (3a) of each step (5) of the first step structure (4) or a consecutive subset of the steps (5) of the first step structure (4) in each case abuts a surface section (3b) of a step (5) of the second step structure (4),
- arranging the first component (1) and the second component (2) in the abutting position, and
- subsequently welding together the first component (1) and the second component (2), by welding together the abutting surface sections (3a, 3b) of the steps (5) of the first and second step structures (4).

2. The method according to claim 1, wherein the first and/or the second step structures (4) are formed in such a way that each step (5) is formed by exactly one other of the layers (3) of the respective step structure (4).

3. The method according to claim 1 or claim 2, wherein the first component (1) and the second component (2) comprise the same number of layers (3).

4. The method according to claim 3, wherein the first and the second step structures (4) are formed in such a way and the abutting position is chosen such that, in the abutting position, each layer (3) of the first component (1) lies at the same level as another layer (3) of the second component (2) .

5. The method according to claim 3, wherein the first and the second step structures (4) are formed in such a way and the abutting position is chosen such that, in the abutting position, the two components (1, 2) are disposed offset to one another by one layer (3).

6. The method according to any of the preceding claims, wherein the first and the second step structures (4) are formed in such a way that, in the abutting position, the front section (3c) of at least a portion of the steps (5) of the first step structure (4) abuts a front section (3c) of a step (5) of the second step structure (4).

7. The method according to any of the preceding claims, wherein, after the formation of the first step structure (4) and the second step structure (4), the surface sections (3a, 3b) of the steps (5) of the first step structure (4) and the second step structure (4) are processed in order to reduce the surface roughness.

8. The method according to any of the preceding claims, wherein the welding takes place by means of laser welding, ultrasonic welding, induction welding and/or resistance welding.

9. The method according to any of the preceding claims, wherein the first component (1) and the second component (2) are brought into the abutting position by
- laying the first component (1) and the second component (2) spaced apart from one another on a support device (22) in such a way that the first step structure (4) and the second step structure (4) face one another, and
- then moving the first component (1) and the second component (2) towards one another, wherein the support device (22) is constructed such that it guides the first component (1) and the second component (2) into the abutting position.

10. The method according to any of the preceding claims, wherein the first component (1) and the second component (2) are each structural components of an aircraft.

## Patentansprüche

1. Verfahren zum Zusammenschweißen einer ersten Komponente (1) aus einem thermoplastischen Schichtverbundmaterial mit mehreren Schichten (3) und einer zweiten Komponente (2) aus einem thermoplastischen Schichtverbundmaterial mit mehreren Schichten (3), umfassend die folgenden Schritte:
- Entfernen von Material des Schichtverbundmaterials der ersten Komponente (1) entlang eines ersten Längsrandes (23) der ersten Komponente (1) mit Hilfe eines Laserstrahls zur Bildung einer ersten Stufenstruktur (4) mit mehreren Stufen (5) am ersten Längsrand (23), wobei jede Stufe (5) der ersten Stufenstruktur (4) durch eine andere oder mehrere andere der Schichten (3) des Schichtverbundmaterials der ersten Komponente (1) gebildet ist und einen Oberflächenabschnitt (3a) parallel zur Erstreckungsrichtung der Schichten (3) und einen Vorderabschnitt (3c) quer zur Erstreckungsrichtung der Schichten (3) aufweist,
- Entfernen von Material des Schichtverbundmaterials der zweiten Komponente (2) entlang eines zweiten Längsrandes (23) der zweiten Komponente (2) mit Hilfe eines Laserstrahls zur Bildung einer zweiten Stufenstruktur (4) mit mehreren Stufen (5) am zweiten Längsrand (23), wobei
- jede Stufe (5) der zweiten Stufenstruktur (4) durch eine andere oder mehrere andere der Schichten (3) des Schichtverbundmaterials der zweiten Komponente (2) gebildet ist und einen Oberflächenabschnitt (3b) parallel zur Erstreckungsrichtung der Schichten (3) und einen Vorderabschnitt (3c) quer zur Erstreckungsrichtung der Schichten (3) hat und
- die erste Komponente (1) und die zweite Komponente (2) mit ihren Stufenstrukturen (4) in einer aneinander anliegenden Position angeordnet werden können, in welcher der Oberflächenabschnitt (3a) jeder Stufe (5) der ersten Stufenstruktur (4) oder einer aufeinanderfolgende Teilmenge der Stufen (5) der ersten Stufenstruktur (4) jeweils an einem Oberflächenabschnitt (3b) einer Stufe (5) der zweiten Stufenstruktur (4) anliegt,
- Anordnen der ersten Komponente (1) und der zweiten Komponente (2) in der aneinander anliegenden Position und
- anschließend Zusammenschweißen der ersten Komponente (1) und der zweiten Komponente (2) durch Zusammenschweißen der aneinander anliegenden Oberflächenabschnitte (3a, 3b) der Stufen (5) der ersten und zweiten Stufenstruktur (4).

2. Verfahren nach Anspruch 1, bei dem die erste und/oder die zweite Stufenstruktur (4) so gebildet sind, dass jede Stufe (5) durch genau eine andere der Schichten (3) der entsprechenden Stufenstruktur (4) gebildet ist.

3. Verfahren nach Anspruch 1 oder Anspruch 2, bei dem die erste Komponente (1) und die zweite Komponente (2) dieselbe Anzahl von Schichten (3) aufweisen.

4. Verfahren nach Anspruch 3, bei dem die erste und die zweite Stufenstruktur (4) so gebildet sind und die aneinander anliegende Position so gewählt ist, dass in der aneinander anliegenden Position jede Schicht (3) der ersten Komponente (1) auf derselben Höhe wie eine andere Schicht (3) der zweiten Komponente (2) liegt.

5. Verfahren nach Anspruch 3, bei dem die erste und die zweite Stufenstruktur (4) so gebildet sind und die aneinander anliegende Position so gewählt ist, dass in der aneinander anliegenden Position die zwei Komponenten (1, 2) um eine Schicht (3) gegeneinander versetzt angeordnet sind.

6. Verfahren nach einem der vorangehenden Ansprüche, bei dem die erste und die zweite Stufenstruktur (4) so gebildet sind, dass in der aneinander anliegenden Position der Vorderabschnitt (3c) von zumindest einem Teil der Stufen (4) der ersten Stufenstruktur (4) an einem Vorderabschnitt (3c) einer Stufe (5) der zweiten Stufenstruktur (4) anliegt.

7. Verfahren nach einem der vorangehenden Ansprüche, bei dem nach der Bildung der ersten Stufenstruktur (4) und der zweiten Stufenstruktur (4) die Oberflächenabschnitte (3a, 3b) der Stufen (5) der ersten Stufenstruktur (4) und der zweiten Stufenstruktur (4) bearbeitet werden, um die Oberflächenrauigkeit zu verringern.

8. Verfahren nach einem der vorangehenden Ansprüche, bei dem das Schweißen durch Laserschweißen, Ultraschallschweißen, Induktionsschweißen und/oder Widerstandsschweißen erfolgt.

9. Verfahren nach einem der vorangehenden Ansprüche, bei dem die erste Komponente (1) und die zweite Komponente (2) in die aneinander anliegende Position gebracht werden, indem
- die erste Komponente (1) und die zweite Komponente (2) in der Weise voneinander beabstandet auf eine Trägervorrichtung (22) gelegt werden, dass die erste Stufenstruktur (4) und die zweite Stufenstruktur (4) einander zugewandt sind, und
- die erste Komponente (1) und die zweite Komponente (2) dann aufeinander zu bewegt werden, wobei die Trägervorrichtung (22) so konstruiert ist, dass sie die erste Komponente (1) und die zweite Komponente (2) in die aneinander anliegende Position führt.

10. Verfahren nach einem der vorangehenden Ansprüche, bei dem die erste Komponente (1) und die zweite Komponente (2) jeweils Strukturkomponenten eines Flugzeugs sind.

## Revendications

1. Procédé pour souder ensemble un premier composant (1) formé par un matériau composite en couches thermoplastique ayant des couches multiples (3) et un deuxième composant (2) formé par un matériau composite en couches thermoplastique ayant des couches multiples (3), comprenant les étapes suivantes :
- le retrait de matériau du matériau composite en couches du premier composant (1) le long d'un premier bord longitudinal (23) du premier composant (1) au moyen d'un faisceau laser afin de former une première structure en gradins (4) ayant une pluralité de gradins (5) sur le premier bord longitudinal (23), avec chaque gradin (5) de la première structure en gradins (4) formé par une autre ou plusieurs autres des couches (3) du matériau composite en couches du premier composant (1), et ayant une section de surface (3a) parallèle à la direction d'extension des couches (3) et une section frontale (3c) transversale à la direction d'extension des couches (3),
- le retrait de matériau du matériau composite en couches du deuxième composant (2) le long d'un deuxième bord longitudinal (23) du deuxième composant (2) au moyen d'un faisceau laser afin de former une deuxième structure en gradins (4) ayant une pluralité de gradins (5) sur le deuxième bord longitudinal (23), dans lequel
- chaque gradin (5) de la deuxième structure en gradins (4) est formé par une autre ou plusieurs autres des couches (3) du matériau composite en couches du deuxième composant (2), et a une section de surface (3b) parallèle à la direction d'extension des couches (3) et une section frontale (3c) transversale à la direction d'extension des couches (3), et
- le premier composant (1) et le deuxième composant (2) peuvent être disposés avec leurs structures en gradins (4) dans une position de butée, dans laquelle position la section de surface (3a) de chaque gradin (5) de la première structure en gradins (4) ou un sous-ensemble consécutif des gradins (5) de la première structure en gradins (4) bute dans chaque cas contre une section de surface (3b) d'un gradin (5) de la deuxième structure en gradins (4),
- la disposition du premier composant (1) et du deuxième composant (2) dans la position de butée, et
- le soudage ensemble subséquent du premier composant (1) et du deuxième composant (2) en soudant ensemble les sections de surface en butée (3a, 3b) des gradins (5) des première et deuxième structures en gradins (4).

2. Procédé selon la revendication 1, dans lequel la première et/ou la deuxième structure en gradins (4) sont formées de manière à ce que chaque gradin (5) soit formé par exactement une autre des couches (3) de la structure en gradins (4) respective.

3. Procédé selon la revendication 1 ou la revendication 2, dans lequel le premier composant (1) et le deuxième composant (2) comprennent le même nombre de couches (3) .

4. Procédé selon la revendication 3, dans lequel les première et deuxième structures en gradins (4) sont formées de manière à ce que, et la position de butée est choisie de manière à ce que, dans la position de butée, chaque couche (3) du premier composant (3) se situe au même niveau qu'une autre couche (3) du deuxième composant (2).

5. Procédé selon la revendication 3, dans lequel les première et deuxième structures en gradins (4) sont formées de manière à ce que, et la position de butée est choisie de manière à ce que, dans la position de butée, les deux composants (1, 2) sont disposés de manière décalée l'un par rapport à l'autre de l'ordre d'une couche (3).

6. Procédé selon l'une quelconque des revendications précédentes, dans lequel les première et deuxième structures en gradins (4) sont formées de manière à ce que, dans la position de butée, la section frontale (3c) d'au moins une partie des gradins (5) de la première structure en gradins (4) bute contre une section frontale (3c) d'un gradin (5) de la deuxième structure en gradins (4).

7. Procédé selon l'une quelconque des revendications précédentes, dans lequel, après la formation de la première structure en gradins (4) et la deuxième structure en gradins (4), les sections de surface (3a, 3b) des gradins (5) de la première structure en gradins (4) et la deuxième structure en gradins (4) sont traitées afin de réduire la rugosité de surface.

8. Procédé selon l'une quelconque des revendications précédentes, dans lequel le soudage a lieu au moyen d'un soudage laser, d'un soudage par ultrasons, d'un soudage par induction et/ou d'un soudage par résistance.

9. Procédé selon l'une quelconque des revendications précédentes, dans lequel le premier composant (1) et le deuxième composant (2) sont mis dans la position de butée en
- posant le premier composant (1) et le deuxième composant (2) espacés l'un de l'autre sur un dispositif de support (22) de manière à ce que la première structure en gradins (4) et la deuxième structure en gradins (4) se font face l'une l'autre, et
- en rapprochant ensuite le premier composant (1) et le deuxième composant (2) l'un de l'autre, dans lequel le dispositif de support (22) est configuré de manière à ce qu'il guide le premier composant (1) et le deuxième composant (2) dans la position de butée.

10. Procédé selon l'une quelconque des revendications précédentes, dans lequel le premier composant (1) et le deuxième composant (2) sont chacun des composants structurels d'un aéronef.
